# EUROPEAN PATENT APPLICATION

(11) **EP 4 733 541 A1**
(43) Date of publication of application: **29.04.2026**
(21) Application number: 24306798.0
(22) Date of filing: 24.10.2024
(51) Int. Cl.: E21B 43/12, C09K 8/94, C09K 8/594

(54) **A METHOD FOR PRODUCING HYDROCARBONS**

(71) Applicant: TotalEnergies OneTech, 92400 Courbevoie (FR); Centre National de la Recherche Scientifique, 75016 Paris (FR); Ecole Supérieure de Physique et de Chimie Industrielles de la Ville de Paris, 75005 Paris (FR); SORBONNE UNIVERSITE, 75006 Paris (FR)
(72) Inventor: TALINI, Laurence, 75013 Paris (FR); DELANCE, Lea, 64018 Pau (FR); PASSADE-BOUPAT, Nicolas, 64320 Idron (FR); BELT, Roel, 64018 Pau (FR); LAURANSON, Didier, 64018 Pau (FR); VERNEUIL, Emilie, 75006 Paris (FR); LEQUEUX, François, 75010 Paris (FR)
(74) Representative: Bandpay & Greuter

(57) **Abstract**

The invention relates to a method of producing hydrocarbons from a subterranean formation via a production tubing (110) of a production well (100) located in the subterranean formation (1), comprising:
- collecting hydrocarbons from one or more inlets of the production tubing;
- injecting gas into the production tubing;
- injecting a solution comprising a polysiloxane compound into the production tubing;
- forming a hydrocarbon-based foam within the production tubing;
- recovering the hydrocarbon-based foam from the production tubing.

## Description

### Technical field

The present invention relates to a method of producing hydrocarbons from a subterranean formation and the use of a polysiloxane compound for foaming crude oil in said method.

### Technical background

For certain production wells, the production rate of hydrocarbons is low. This can be due to either the low pressure prevailing in the production well or the limited quantity of gas associated with the hydrocarbons. This low pressure prevents the production fluid to naturally rise through the production tubing to the surface, requiring artificial lift techniques, especially when the production fluid includes heavy and very heavy crude oils and bitumen. One such artificial lift technique is based on the facilitation of the flow of hydrocarbons along the production tubing. A conventional artificial lift technique employed is commonly known as 'gas lift'. In this process, pressurized gas is injected into the hydrocarbons through the production tubing. Typically, the gas which is used is a hydrocarbon gas collected from the production well. Gas injection reduces the weight of the hydrocarbons by reducing hydrostatic pressure in the production tubing, facilitating their ascent in the production tubing.

Although this process is very efficient, it is highly energy-intensive and accounts for approximately 10 % of the energy consumed at the production well. Although gas lift systems are advantageous in most applications, production wells which contain heavier production fluids are often not effectively operated using typical gas lift systems. When heavier crude oil is present in the production fluid, the injected gas tends to channel up the production tubing. This gas channelling causes a stratified flow up the production tubing thereby reducing the amount of production fluid being lifted to the surface and decreasing overall well production.

It is possible to circumvent this problem by adding a foaming composition in the production well. When the foaming composition contacts and mixes with crude oil and fluid in the production well, a lighter production fluid is formed, due to the inclusion and retention of the lift gas in the production fluid. Generally the gas is retained in stable gas bubbles in the production fluid. The gas bubbles are adapted to reduce the density and thus the hydrostatic pressure of the production fluid in the production tubing and thereby increase the flow of production fluid to the surface.

Usually, the foaming composition added in the production well comprises one or more foaming agents at a high concentration. These foaming agents are not recovered and may thus poison catalysts which are used in the further steps of hydrocarbon treatments.

Within this context, there is a need for an improved process of gas lift hydrocarbon production, and in particular a need for improved foaming of production fluid with gas in such a process.

There is also a need for a foaming composition able to efficiently foam liquid hydrocarbons with gas in a production well even when used at a low concentration, so as to avoid poisoning catalysts used in downstream processing.

### Summary of the invention

The invention relates to a method of producing hydrocarbons from a subterranean formation *via* a production tubing of a production well located in the subterranean formation, comprising:
- collecting hydrocarbons from one or more inlets of the production tubing;
- injecting gas into the production tubing;
- injecting a solution comprising a polysiloxane compound into the production tubing;
- forming a hydrocarbon-based foam within the production tubing;
- recovering the hydrocarbon-based foam from the production tubing.

In some variations, the foam is formed in a vertical portion of the production well.

In some variations, the hydrocarbons comprise or essentially consist of crude oil.

In some variations, water is also collected from one or more inlets of the production tubing.

In some variations, the solution is combined with the gas at the surface, and the gas and solution are injected into the production tubing *via* a common line.

In some variations, the solution is injected into the production tubing *via* a solution line, and the gas is injected into the production tubing *via* a gas line different from the solution line.

In some variations, the gas and the solution are simultaneously injected into the production tubing.

In some variations, the solution comprises from 10 ppm to 10 % of polysiloxane compound by weight.

In some variations, the polysiloxane compound is polydimethylsiloxane.

In some variations, the polysiloxane compound has a weight-average molecular weight from 250 to 500,000 g/mol, preferably from 500 to 400,000 g/mol, more preferably from 750 to 300,000 g/mol.

In some variations, the method further comprises:
- breaking up the recovered hydrocarbon-based foam to separate the hydrocarbons from the gas.

In some variations, breaking up the recovered hydrocarbon-based foam is carried out owing to a decrease in temperature relative to the temperature in the production tubing.

In some variations, breaking up the recovered hydrocarbon-based foam is carried out by adding an additional solution comprising a polysiloxane compound to the recovered hydrocarbon-based foam.

In some variations, the polysiloxane compound in the solution is the same as the polysiloxane compound in the additional solution.

In some variations, the polysiloxane compound in the solution has a lower weight-average molecular weight than the polysiloxane compound in the additional solution.

The invention also relates to the use of a polysiloxane compound for foaming crude oil or a petroleum fraction with a gas.

In some variations, the polysiloxane compound is added to the crude oil or petroleum fraction as a solution comprising the polysiloxane compound.

In some variations, the polysiloxane compound is added to the crude oil or petroleum fraction in an amount from 0.01 ppm to 100 ppm of polysiloxane compound by weight, preferably from 0.1 ppm to 20 ppm of polysiloxane compound by weight, relative to the crude oil or petroleum fraction.

In some variations, the polysiloxane compound is polydimethylsiloxane.

In some variations, the polysiloxane compound has a weight-average molecular weight from 250 to 500,000 g/mol, preferably from 500 to 400,000 g/mol, more preferably from 750 to 300,000 g/mol.

In some variations, foaming occurs in the further presence of water.

The invention makes it possible to solve the abovementioned needs by the use of a polysiloxane compound in a solution to foam hydrocarbons with a gas. Polysiloxane compounds are generally known in the prior art as defoaming agents. In the present invention, said polysiloxane compounds are used on the contrary as foaming agents, preferably at low concentrations. This is particularly advantageous because it makes it possible to limit the number and the amount of chemicals used in the process of producing hydrocarbons. This is also particularly advantageous as these low concentrations limit the poisoning of catalysts used in subsequent hydrocarbon treatment steps.

### Brief description of the drawings

Figure 1 schematically shows an example of a system for implementing the invention.
Figure 2 schematically shows another example of a system for implementing the invention
Figure 3 shows a ternary diagram wherein relative amounts of decane (D), cyclopentanol (C), and polydimethylsiloxane (P) are shown on the axes. S1 and S2 show examples of effective or ineffective formation of foam depending on the position within the diagram.

### Detailed description

The invention will now be described in more detail without limitation in the following description.

### System for implementing the invention

The method of the invention relates to the production of hydrocarbons from a production well in a subterranean formation. The hydrocarbons produced from the well may comprise or essentially consist of crude oil or petroleum. The produced hydrocarbons may be in liquid form and optionally also partly in gaseous form. The hydrocarbons in the production well may comprise or may be cyclic, linear or branched C1-C50 alkanes, alkenes, alkynes, or aromatic compounds. The hydrocarbons may comprise or may be a heavy oil, very heavy oil or bitumen. According to the definitions of the US Geological Survey (American Geological Institute), heavy oil is defined as oil with a density less than 22° API (American Petroleum Institute) and a viscosity greater than 100 cP, extra-heavy oil is defined as oil with a density less than 10° API and a viscosity greater than 100 cP, and bitumen is defined as oil with a density between 7° API and 12° API and a viscosity greater than 10,000 cP.

Other, non-hydrocarbon components may also be produced together with the hydrocarbons. For example, water or brine may be produced together with the hydrocarbons. The water or brine may be naturally present in the subterranean formation and/or may be present as a result of an injection process.

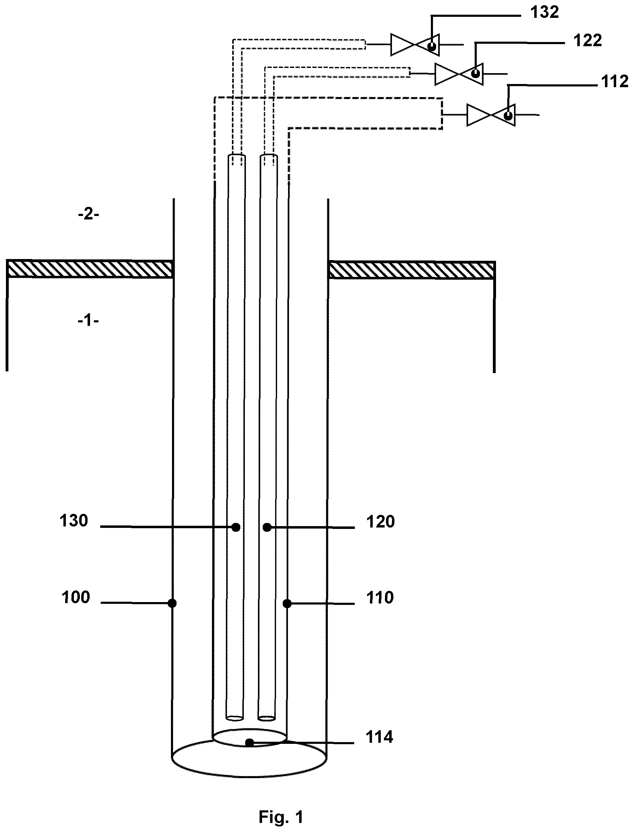

Figure 1, is a schematic representation of an example of a system wherein the method of the invention may be implemented. The system comprises a production well 100. The production well 100 may comprise a substantially vertical portion extending from the surface 2 into the subterranean formation 1. As illustrated, the production well 100 may consist of the substantially vertical portion. Alternatively, the production well 100 may also comprise a non-vertical portion, such as a substantially horizontal portion. Preferably, in this case, the substantially vertical portion is located between the non-vertical portion and the surface.

The production well comprises at least one production tubing 110. The production tubing 110 may comprise at least one inlet and at least one outlet. The at least one inlet is within the subterranean formation. As illustrated, an inlet (or the single inlet) may be located at the extremity 114 of the production tubing which is farthest from the surface 2. The production tubing may also comprise a plurality of inlets regularly arranged or irregularly arranged on the substantially vertical and/or non-vertical portions. Production fluid including hydrocarbons and optionally water or brine may be collected within the production tubing from the one or more inlets. The production fluid may then flow with the production tubing and be recovered from at least one outlet of the production tubing, which may be located at the surface 2. A valve 112 may be provided (preferably on the surface) to control or stop the flow of production fluid recovered from the production tubing 110.

At least one solution line 120 for the injection of a solution into the production tubing 110 may be provided. As illustrated on Figure 1, the solution line 120 may be within the production tubing 110. The solution line 120 may comprise at least one outlet within the production tubing 110, as illustrated, or otherwise in fluid communication with the interior of the production tubing 110. The solution line may also comprise a plurality of outlets regularly arranged or irregularly arranged along the length thereof. As illustrated, the outlet of the solution line 120 may be positioned at or close to the extremity 114 of the production tubing 110. A valve 122 may be present on the solution line 120 (preferably on the surface) to control or stop the flow of solution into the production tubing 110.

At least one gas line 130 for the injection of gas into the production tubing 110 may be provided. As illustrated on Figure 1, the gas line 130 may be within the production tubing 110. The gas line 130 may comprise at least one outlet within the production tubing 110, as illustrated, or otherwise in fluid communication with the interior of the production tubing 110. The gas line 130 may also comprise a plurality of outlets regularly arranged or irregularly arranged along the length thereof. As illustrated, the outlet of the gas line 130 may be positioned at or close to the extremity 114 of the production tubing 110. A valve 132 may be present on the gas line 130 (preferably on the surface) to control or stop the flow of gas into the production tubing 110.

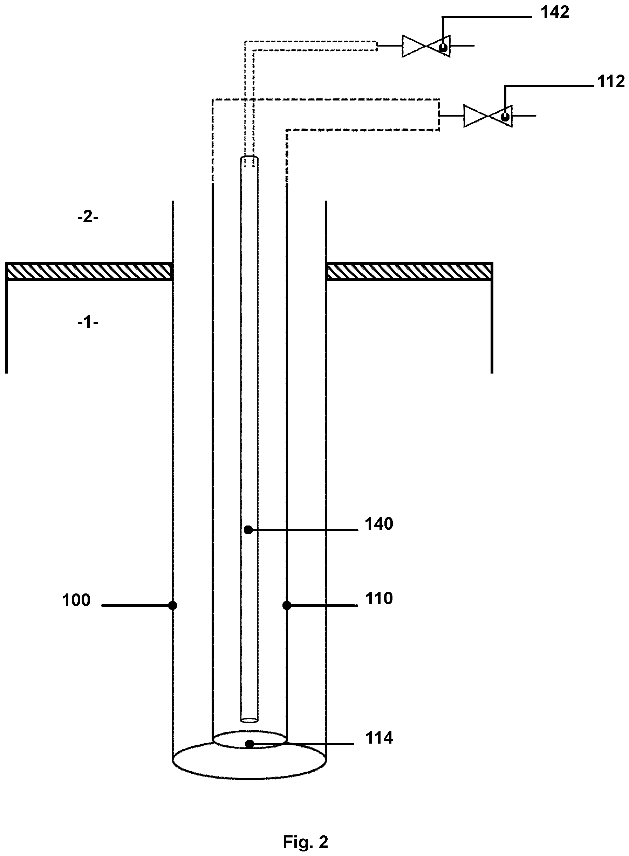

Alternatively, as shown in Figure 2 (which is similar to Figure 1, unless otherwise indicated), at least one common injection line 140 may be present for simultaneously injecting both the solution and the gas. As illustrated, the common injection line 140 may be within the production tubing 110. The common injection line 140 may comprise at least one outlet within the production tubing 110, as illustrated, or otherwise in fluid communication with the interior of the production tubing 110. The common injection line 140 may also comprise a plurality of outlets regularly arranged or irregularly arranged along the length thereof. As illustrated, the outlet of the common injection line 140 may be positioned at or close to the extremity 114 of the production tubing 110. A valve 142 may be present on the common injection line 140 (preferably on the surface) to control or stop the flow of gas into the production tubing 110.

Thus, the gas and the solution may be injected *via* two different lines or *via* a common injection line.

The gas which is injected into the production tubing (*via* the at least one gas line or common injection line) may be for example carbon dioxide, nitrogen, or a hydrocarbon-containing gas, such as natural gas or methane. This gas may for example be obtained from the hydrocarbons recovered from the subterranean formation.

### Foaming solution

In the method of the invention, a solution comprising a polysiloxane compound is injected into the production tubing, *via* the at least one solution line or common injection line. The solution is a foaming solution, which means that it promotes foaming within the production tubing.

The solution comprises a polysiloxane compound.

The solution may comprise:
- from 0.001% (10 ppm) to 10% (100,000 ppm) by weight of a polysiloxane compound,
- from 70% to 99.999% by weight of a solvent, and
- optionally, from 0% to 20% by weight of one or more additives.

The solution may comprise from 0.001% by weight or 10 ppm to 10% by weight or 100,000 ppm of the polysiloxane compound. The weight content is based on the total mass of the solution. The solution may for example comprise from 10 to 100 ppm, 100 to 250 ppm, 250 to 500 ppm, 500 to 1,500 ppm, 1,500 to 2,500 ppm, 2,500 to 4,000 ppm, 4,000 to 6,000 ppm, 6,000 to 8,000 ppm, 8,000 to 10,000 ppm, 10,000 to 20,000 ppm, 20,000 to 50,000 ppm or 50,000 to 100,000 ppm of the polysiloxane compound.

The solution may be formulated to be within the viscosity specification limits for injection.

The solution may comprise from 80% to 99.999% by weight of solvent relative to the total mass of the solution. The solution may comprise 80 to 82.5%, 82.5 to 85%, 85 to 87.5%, 87.5 to 90%, 90 to 92.5%, 92.5 to 95%, 95 to 97.5%, and 97.5 to 99.999% by weight of solvent.

The solution may comprise from 0 to 20% by weight of additives relative to the total mass of the solution. The solution may comprise from 0 to 2.5%, 2.5 to 5%, 5 to 7.5%, 7.5 to 10%, 10 to 12.5%, 12.5 to 15%, 15 to 17.5%, and 17.5 to 20% by weight of additives.

In some variations, the solution may consist of the polysiloxane compound and the solvent and thus be devoid of additive(s).

The solution may be prepared by dissolving or dispersing the polysiloxane compound in the solvent and optionally adding additives to the solution.

The solvent can be heated to facilitate homogenization of the polysiloxane compound.

By "polysiloxane compound" is meant a compound comprising a plurality of Si-O bonds, preferably a chain of repeating units each comprising a Si-O bond.

The polysiloxane compound may be a siloxane homopolymer or copolymer.

The polysiloxane compound may also be a mixture of two or more compounds having different formulas, such as different siloxane homopolymers and/or copolymers.

The or each polysiloxane compound can be linear, branched or cyclic.

The polysiloxane compound may be a (linear, branched or cyclic) polymer of formula -(O-Si(R₁)(R₂))ₙ-, where R₁ and R₂ independently denote -H, -OH, an alkyl group comprising 1 to 6 carbon atoms, or an aryl group comprising at least 6 carbon atoms and n is an integer which is preferably from 3 to 6700, more preferably from 30 to 1300. Each of R₁ and R₂ may independently and optionally be substituted, such as partially or fully halogenated, preferably partially or fully fluorinated. Alternatively, each of R₁ and R₂ may be unsubstituted.

The polysiloxane compound can be a cyclic compound such as, for example, octamethylcyclotetrasiloxane (D4) [(CH₃)₂SiO]₄, decamethylcyclopentasiloxane (D5) [(CH₃)₂SiO]₅, and dodecamethylcyclohexasiloxane (D6) [(CH₃)₂SiO]₆.

The polysiloxane compound can be a linear or branched compound such as, for example, polydimethylsiloxane (PDMS) [(CH₃)₂SiO]ₙ, polymethylhydrosiloxane (PMHS) [(CH₃)HSiO]ₙ, polymethylphenylsiloxane (PMPS) [(CH₃)(C₆H₅)SiO]ₙ, and polyethylhydrosiloxane (PEHS) [(C₂H₅)HSiO]ₙ.

The polysiloxane compound can be a linear or branched fluorinated compound such as, for example, trifluoropropylmethylsiloxane [(CF₃CH₂CH₂)(CH₃)SiO]ₙ, polydimethylsiloxane-co-polymethyltrifluoropropylsiloxane (C₂H₆OSi)ₘ[(CF₃CH₂CH₂)(CH₃)SiO]ₙ, fluorosilicone (polymethyltrifluoropropylsiloxane) [(CF₃CH₂CH₂)(CH₃)SiO]ₙ, or perfluoroalkylmethylsiloxane (C₆F₁₃)(CH₃)SiO]ₙ where n and m are integers whose individual or combined values respect the previously defined molar mass ranges.

Preferably, the polysiloxane is the polydimethylsiloxane.

The polysiloxane compound may have a weight-average molecular weight from 250 to 500,000 g/mol, preferably from 500 to 400,000 g/mol, and more preferably from 750 to 300,000 g/mol. The siloxane polymer and/or the siloxane copolymer may have a molar mass in the ranges of 250 to 2,500 g/mol, 2,500 to 10,000 g/mol, 10,000 to 25,000 g/mol, 25,000 to 50,000 g/mol, 50,000 to 75,000 g/mol, 75,000 to 100,000 g/mol, 100,000 to 150,000 g/mol, 150,000 to 200,000 g/mol, 200,000 to 250,000 g/mol, 250,000 to 300,000 g/mol, 300,000 to 450,000 g/mol, and 450,000 to 500,000 g/mol.

The nature and injected amount of the polysiloxane compound may be selected so as to effectively promote the formation of foam. Modelling based on respective solubility parameters (for example Hansen parameters) of the hydrocarbons and polysiloxane compound and/or routine foaming experiments may assist in this selection.

The solvent in the solution may be chosen from: linear or cyclic C3 to C20 alkanes, optionally functionalized, such as hexane or decane; optionally substituted C6 aromatics, such as benzene, toluene, or xylene; halogenated organic compounds, such as dichloromethane or chloroform; linear or cyclic C3 to C20 alcohols, optionally functionalized, such as pentanol, octanol, or decanol; and linear, branched or cyclic C3 to C20 ketones, optionally functionalized, such as acetone, methyl ethyl ketone, ethyl acetate; and any combination thereof.

The nature and proportions of the solvent in the solution are advantageously selected to properly dissolve the polysiloxane compound.

The additives, if present, may be chosen from: anionic surfactants, such as alkylbenzene sulfonates or sodium dodecyl sulfate; cationic surfactants, such as cetyltrimethylammonium chloride; non-ionic surfactants; amphoteric surfactants, such as betaines; foam stabilizers, such as xanthan gum; corrosion inhibitors, such as amines or phosphonates; and viscosity control agents, such as polyacrylamide; and any combination thereof.

### Formation of the hydrocarbon-based foam in the production tubing and recovery of the foam

Owing to the injection of gas and solution into the production tubing, a hydrocarbon-based foam is formed within the production tubing. The foam includes hydrocarbons collected from the inlet(s) of the production tubing and optionally water or brine which may also be collected from the inlet(s) of the production tubing.

The gas may be injected continuously. The gas may be injected intermittently. The gas may be heated prior to injection.

The solution may be injected continuously. The solution may be injected intermittently. The solution may be heated prior to injection.

The solution may be injected concomitantly with the gas, either continuously or intermittently. A continuous and concomitant injection of gas and solution may be referred to as a gas lift process. An intermittent (for example periodic) and concomitant injection of gas and solution may be useful to intermittently reduce the hydrostatic pressure within the production tubing.

Alternatively, the solution and gas may be injected at different times. The injection of solution and gas may alternate, or the gas may be injected during only part of the injection of the solution, or the solution may be injected during only part of the injection of the gas.

The hydrocarbon-based foam may comprise for example from 0.01 ppm to 100 ppm of the polysiloxane compound. The weight content is based on the total mass of the foam. The hydrocarbon-based foam may comprise from 0.01 to 1 ppm, 1 to 2.5 ppm, 2.5 to 5 ppm, 5 to 15 ppm, 15 to 25 ppm, 25 to 40 ppm, 40 to 60 ppm, 60 to 80 ppm, and 80 to 100 ppm of the polysiloxane compound.

The hydrocarbon-based foam may have a density from 250 to 1000 % lower, preferably from 500 to 750 % lower than the density of the production fluid in the absence of gas and solution injection.

The hydrocarbon-based foam may be either actively or passively recovered from the production tubing. The hydrocarbon-based foam may emerge from the production tubing towards the surface owing to the pressure present in the production tubing, thus defining a passive recovery of the hydrocarbon-based foam. Alternatively, the recovery may be conducted or facilitated through the use of a pump, thus defining an active recovery of the hydrocarbon-based foam.

Once the hydrocarbon-based foam has been recovered, the foam may be broken to separate the hydrocarbons from the injected gas. This may be referred to as a defoaming step. When the foam is broken, gas is separated from liquid. Therefore, liquid hydrocarbons are separated from the injected gas and also from gaseous hydrocarbons, if present. Water or brine, if present, may be separated from the liquid hydrocarbons in the same step, or in a different step.

Breaking up the recovered hydrocarbon-based foam may be carried out in several ways.

Firstly, the foam may be stable during a limited period of time, so that it is possible to store the recovered hydrocarbon-based foam in a tank and wait for the foam to naturally break up.

Secondly, the stability of the foam may be affected by temperature. In some variations, the foam is more stable at higher temperatures, so that, by exposing the foam to a temperature at the surface which is lower than the temperature within the production tubing, the foam is broken. Thus, the method may include a passive cooling step, wherein the recovered hydrocarbon-based foam is allowed to cool down. The method may alternatively include an active cooling step, wherein the foam is subjected to a temperature lower than the environment temperature. Preferably the difference between the temperature in the production tubing and the temperature of the foam at the surface (or after cooling) is from 10 to 50 °C and more preferably from 25 to 40 °C.

Thirdly, a defoaming agent can be added to the recovered hydrocarbon-based foam to promote, trigger or accelerate foam break-up. The defoaming agent may be comprised in an additional solution which is added to the recovered hydrocarbon-based foam. The defoaming agent may be added topside.

A defoaming agent may reduce the surface tension of foam bubbles, causing them to burst and separate more quickly into gases and liquids. Defoaming agents can include siloxane compounds or silicones, fatty alcohols, mineral oils, vegetable oils and polymers such as polyethers or polyacrylates.

For example, polysiloxane compounds, and particularly polysiloxane compounds as defined above, may be used for breaking up the recovered hydrocarbon-based foam.

In some variations, the same polysiloxane compound as the one injected into the production tubing may be used as a defoaming agent. This is because the foaming properties of the polysiloxane compound depend on the concentration of the compound. By increasing the concentration of polysiloxane compound in the recovered hydrocarbon-based foam through the addition of the additional solution, the break-up of the recovered hydrocarbon-based foam may be promoted, triggered or accelerated.

Alternatively, a polysiloxane compound having the same chemical structure as the one injected into the production tubing, but having a different weight average molecular weight, may be used. Indeed, the foaming properties of a polysiloxane compound may depend on the molecular weight of the compound. Generally, lower molecular weights tend to favor foaming, while higher molecular weights tend to favor defoaming. Therefore, the method may include adding to the recovered hydrocarbon-based foam an additional solution having a polysiloxane compound which has a higher weight-average molecular weight than the polysiloxane compound injected into the production tubing.

Fourthly, it is also possible to use physical or mechanical treatments to carry out the breaking up of the recovered hydrocarbon-based foam (optionally in combination with any of the above other options). In particular, the hydrocarbon-based foam may be directed to a phase separator. Inside the separator, baffles and coalescing plates can be installed to aid separation. Such a separator may increase the surface area of contact with a solid and slow down the flow, making it easier for the foam bubbles to coalesce into liquids.

Alternatively, one or more cyclonic separators can also be used. A cyclonic separator uses centrifugal force to separate the different phases within a cyclone. The foam may be introduced tangentially to the cyclone wall, which imparts a rotational movement that forces the liquid(s) towards the walls, so that they flow downwards, while the gas escapes through a central portion.

After passing through one or more separators, the obtained liquid(s) may be directed to a degassing tank where additional gases may be released. This tank allows a finer separation of gases and liquid.

The separated liquid(s) may require additional treatment to remove residual foam or dissolved gases. This may include the use of heaters, dehydrators or special storage tanks. The separated gas may be directed to compressors or gas treatment units to be purified and brought up to specification before being sold or fully or partly re-injected, for example into the production tubing as described above.

### Example

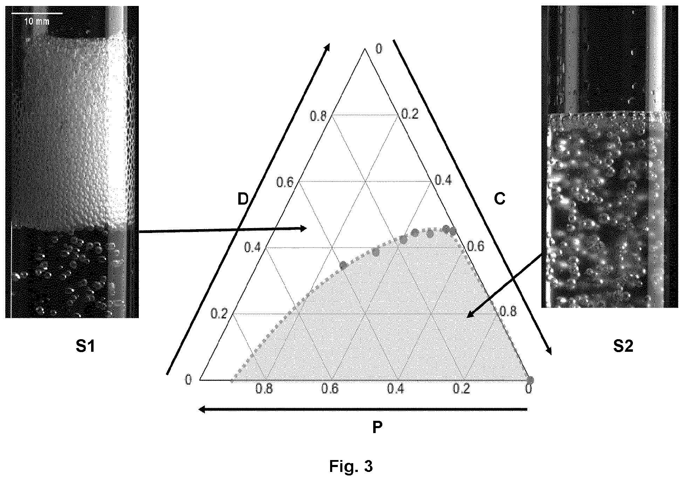

The ability of a PDMS compound to promote foaming of liquid hydrocarbons with a gas was tested in a model system. Various liquid mixtures of decane and cyclopentanol having different relative proportions and further containing various concentrations of a PDMS having a molecular weight of 116,000 g/mol were made. Each liquid mixture was placed in a vessel equipped with a porous filter at the bottom thereof. Air was injected into the vessel at a controlled flow rate from below the porous filter, so as to generate bubbles of air within the vessel. The formation of a foam was observed from the outside of the vessel. In some cases, a single phase can be seen (S1 in Figure 3), which means that effective foaming has taken place (as the PDMS is soluble in the liquid) and in other cases two phases can be seen (S2 in Figure 3), namely one PDMS-rich phase and another phase containing little PDMS so that no effective foaming can take place.

The results are shown in the ternary diagram of Figure 3. They evidence that PDMS used at a sufficiently low concentration has foaming properties. The maximum amount of PDMS which can be used may depend on the nature of the hydrocarbons.

## Claims

1. A method of producing hydrocarbons from a subterranean formation *via* a production tubing of a production well located in the subterranean formation, comprising:
- collecting hydrocarbons, preferably comprising or consisting essential of crude oil, from one or more inlets of the production tubing;
- injecting gas into the production tubing;
- injecting a solution comprising a polysiloxane compound into the production tubing;
- forming a hydrocarbon-based foam within the production tubing;
- recovering the hydrocarbon-based foam from the production tubing.

2. The method of claim 1, wherein the foam is formed in a vertical portion of the production well.

3. The method of any one of claims 1 to 2, wherein water is also collected from one or more inlets of the production tubing.

4. The method of any one of claims 1 to 3, wherein the solution is combined with the gas at the surface, and the gas and solution are injected into the production tubing *via* a common line.

5. The method of any one of claims 1 to 4, wherein the solution is injected into the production tubing *via* a solution line, and the gas is injected into the production tubing *via* a gas line different from the solution line.

6. The method of any one of claims 1 to 5, wherein the gas and the solution are simultaneously injected into the production tubing.

7. The method of any one of claims 1 to 6, wherein the solution comprises from 10 ppm to 10 % of polysiloxane compound by weight.

8. The method of any one of claims 1 to 7, wherein the polysiloxane compound is polydimethylsiloxane; and/or wherein the polysiloxane compound has a weight-average molecular weight from 250 to 500,000 g/mol, preferably from 500 to 400,000 g/mol, more preferably from 750 to 300,000 g/mol.

9. The method of any one of claims 1 to 8, further comprising:
- breaking up the recovered hydrocarbon-based foam to separate the hydrocarbons from the gas.

10. The method of claim 9, wherein breaking up the recovered hydrocarbon-based foam is carried out owing to a decrease in temperature relative to the temperature in the production tubing; and/or breaking up the recovered hydrocarbon-based foam is carried out by adding an additional solution comprising a polysiloxane compound to the recovered hydrocarbon-based foam, wherein, preferably, the polysiloxane compound in the solution is the same as the polysiloxane compound in the additional solution or the polysiloxane compound in the solution has a lower weight-average molecular weight than the polysiloxane compound in the additional solution.

11. The use of a polysiloxane compound for foaming crude oil or a petroleum fraction with a gas.

12. The use of claim 11, wherein the polysiloxane compound is added to the crude oil or petroleum fraction as a solution comprising the polysiloxane compound.

13. The use of claim 11 or 12, wherein the polysiloxane compound is added to the crude oil or petroleum fraction in an amount of 0.01 ppm to 100 ppm of polysiloxane compound by weight, preferably from 0.1 ppm to 20 ppm of polysiloxane compound by weight, relative to the crude oil or petroleum fraction.

14. The use of any one of claims 11 to 13, wherein the polysiloxane compound is polydimethylsiloxane; and/or wherein the polysiloxane compound has a weight-average molecular weight from 250 to 500,000 g/mol, preferably from 500 to 400,000 g/mol, more preferably from 750 to 300,000 g/mol.

15. The use of any one of claims 11 to 14, wherein foaming occurs in the further presence of water.
